(19) Europäisches Patentamt
European Patent Office
Office européen des brevets

(11) **EP 2 504 659 B1**

(12) **EUROPÄISCHE PATENTSCHRIFT**

(45) Veröffentlichungstag und Bekanntmachung des Hinweises auf die Patenterteilung:
**13.01.2016 Patentblatt 2016/02**

(51) Int Cl.:
***G01B 11/25*** (2006.01)

(21) Anmeldenummer: **10778887.9**

(86) Internationale Anmeldenummer:
**PCT/EP2010/065601**

(22) Anmeldetag: **18.10.2010**

(87) Internationale Veröffentlichungsnummer:
**WO 2011/064048 (03.06.2011 Gazette 2011/22)**

(54) **VORRICHTUNG UND VERFAHREN ZUR MESSUNG UND KOMPENSATION VON BEWEGUNGSEINFLÜSSEN BEI PHASENSCHIEBE-PROFILOMETERN UND DESSEN ANWENDUNG AUF MOBILE, FREIHANDGEFÜHRTE PROFILOMETRIE**

DEVICE AND METHOD FOR MEASURING AND COMPENSATING MOVEMENT INFLUENCES IN PHASE-SHIFT PROFILOMETERS AND THE APPLICATION THEREOF IN MOBILE, MANUALLY CONTROLLED PROFILOMETRY

DISPOSITIF ET PROCÉDÉ POUR MESURER ET COMPENSER DES INFLUENCES DE MOUVEMENT DANS DES PROFILOMÈTRES DE DÉPHASAGE ET LEUR APPLICATION À LA PROFILOMÉTRIE MOBILE PORTABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2009 DE 102009056177**

(43) Veröffentlichungstag der Anmeldung:
**03.10.2012 Patentblatt 2012/40**

(73) Patentinhaber: **Siemens Aktiengesellschaft**
**80333 München (DE)**

(72) Erfinder:
• **KOCAMAN, Dehan**
**80331 München (DE)**
• **WISSMANN, Patrick**
**81677 München (DE)**

(56) Entgegenhaltungen:
• **Gumhold, Stefan ; König, Sören: "Image-Based motion Compensation for Structured Light Scanning of Dynamic Surfaces", 07171 - Visual Computing - Convergence of Computer Graphics and Computer Vision, 28. Mai 2008 (2008-05-28), Seiten 1-4, XP002561921, ISSN: 1862-4405 Gefunden im Internet: URL:http://drops.dagstuhl.de/opus/volltext e/2008/1502/pdf/07171.GumholdSt efan.Paper.1502.pdf [gefunden am 2010-01-05] in der Anmeldung erwähnt**
• **WEISE, T.; LEIBE, B.; VAN GOOL, L.: "Fast 3D Scanning with Automatic Motion Compensation", COMPUTER VISION AND PATTERN RECOGNITION, 2007. CVPR '07. IEEE CONFERENCE ON, 16. Juli 2007 (2007-07-16), Seiten 1-8, XP002624081, DOI: 10.1109/CVPR.2007.383291 ISBN: 1-4244-1180-7 in der Anmeldung erwähnt**

## Beschreibung

Vorrichtung und Verfahren zur Messung und Kompensation von Bewegungseinflüssen bei Phasenschiebe-Profilometern und dessen Anwendung auf mobile, freihandgeführte Profilometrie Die vorliegende Erfindung betrifft eine Vorrichtung gemäß dem Oberbegriff des unabhängigen Anspruchs 1 sowie ein Verfahren gemäß dem Oberbegriff des unabhängigen Anspruchs 5.

Die vorliegende Erfindung betrifft eine Vorrichtung und ein Verfahren zur zwei- oder dreidimensionalen Vermessung makroskopischer, mikroskopischer oder submikroskopischer Oberflächentopographie.

Eine Ursache von Messfehlern bei einer Phasenschiebe-Profilometrie liegt in einer räumlichen Bewegung des aufprojizierten Messmusters relativ zur Kamera während eines Messvorgangs. Die relative Bewegung verletzt die Annahme der Phasenschiebe-Profilometrie, dass ein Bereich des Messmusters während des Ablaufs der Mustersequenz konstant einen Bereich des Objekts beleuchtet, und dieser Bereich ortsfest auf dem Bildwandler abgebildet wird. Diese relative Verschiebung führt dazu, dass das die geometrische Information tragende Phasenbild verzerrt wird.

Gemäß dem Stand der Technik sind zur Kompensation von Bewegungseinflüssen bei Phasenschiebe-Profilometern zwei gängige Verfahren bekannt:

Verfahren A schätzt die relative Bewegung zwischen Objekt und Messgerät anhand ihres Einflusses auf das Phasenmuster [1]. Durch die Bewegung überlagert sich eine Wellenfunktion mit dem Phasenmuster. Dies verursacht bei der dreidimensionalen Rekonstruktion des Objekts eine wellige Oberfläche. Es wird dabei angenommen, dass die gemessene Oberfläche innerhalb einer Periode des Messmusters ideal planar verläuft und daher die Welligkeit des Phasenmusters ausschließlich durch die Bewegung hervorgerufen wird. Der aufgenommene wellige Phasenverlauf wird mit Hilfe eines Modells auf einen unverzerrten Phasenverlauf zurückgeführt. Diese bestmögliche Übereinstimmung liefert eine Schätzung für die relative Bewegung von Objekt und Messgerät zueinander. Mit Hilfe der Schätzung wird die Kompensation unmittelbar im berechneten Phasenverlauf durchgeführt.

Das Verfahren A weist folgende Nachteile auf:

Die Annahme, dass eine planare Oberfläche gemessen wird, schließt die erfolgreiche Rekonstruktion von Objekten mit unregelmäßiger oder welliger Oberfläche aus. Kleinere Unebenheiten der Oberfläche werden geglättet, was eine Verfälschung der dreidimensionalen Rekonstruktion zur Folge hat.

Die Qualität der Modellangleichung hin zu einem linearen Phasenverlauf reduziert sich mit der Anzahl an Datenpunkten, die innerhalb einer Phasenperiode verfügbar sind. Eine kleine Periodenbreite ist hingegen vorteilhaft für die Reduktion des Messrauschens.

Bei einem Verfahren B wird zwischen jeder regulären Aufnahme ein zusätzliches Muster auf das Objekt projiziert, das ausschließlich der Erkennung von Bewegung dient. Mögliche Musterstrukturen sind Perlin-Rauschen [2] oder ein periodischer Intensitätsgradient [3]. Die Bewegung des Objekts wird dann mittels Pattern-Interleaving-Techniken geschätzt. Die Kompensation der Bewegungsartefakten kann anschließend direkt an den Kamerabildern oder dem Phasenmuster erfolgen.

Verfahren B weist folgende Nachteile auf:

Die zusätzlichen Aufnahmen verlängern signifikant die Dauer eines Messzyklus und begünstigen so zusätzlich die Entstehung der zu kompensierenden Bewegungsartefakte.

Die Projektion der zusätzlichen Muster stellt zusätzliche Anforderungen an den Projektor, die in der Regel einen Low-Cost-Ansatz zur Projektion erschweren.

Die Offenbarung "Bildbasierte Bewegungskompensation für das Abtasten von dynamischen Oberflächen mittels strukturiertem Licht" von Stefan Gumhold und Sören König vom Lehrstuhl vür Computerwissenschaften, TU Dresden, D-01062 Dresden, XP-002561921 beschreibt ein 3D-Abtastsystem, das auf vorübergehender Musterkodifizierung beruht, wobei verschlüsselte Korrespondenzinformationen verbessert kombiniert werden.

Die Offenbarung "Schnelle 3D-Abtastung mit automatischer Bewegungskompensation" von Thibaut Weise vom Computer Vision Lab., ETH Zürich, 8092 Zürich, Schweiz, in 1) - 4244-1180-7/07 in 2007 IEEE beschreibt ein 3D-Abtastsystem, das stereo und aktive Beleuchtung beruhend auf einer Phasenverschiebung zur robusten und genauen Szenenrekonstruktion kombiniert. Dabei überwindet Stereo das traditionelle Phasendiskontinuitätsproblem und ermöglicht die Rekonstruktion von komplexen Szenen, die eine Mehrzahl von Objekten enthalten. Infolge der aufeinanderfolgenden Aufzeichnung von drei Mustern führen Bewegungen zu Artefakten in der Rekonstruktion. Es wird ein geschlossener Ausdruck für den Bewegungsfehler entwickelt zur Anwendung einer Bewegungskompensation auf einer Bildelementeebene.

Es ist Aufgabe der vorliegenden Erfindung bei Phasenschiebe-Profilometern Messfehler, die durch eine relative Bewegung zwischen Objekt und Messgerät während eines Messzyklus entstehen, zu quantifizieren und zu kompensieren. Dies soll die Messdatenqualität, insbesondere bei Anwendungen wie der mobilen, freihandgeführten Profilometrie verbessern.

Die Aufgabe wird durch eine Vorrichtung gemäß dem unabhängigen Anspruch 1 ein Verfahren gemäß dem unabhängigen Anspruch 5 sowie Verwendungen gemäß dem abhängigen Anspruch 9 gelöst.

Gemäß einem ersten Aspekt wird eine Vorrichtung zur Phasenschiebe-Profilometrie mit einem Messgerät bereitgestellt, das ein Projektor zur Aussendung einer Phasenschiebe-Mustersequenz mit einem integrierten Modulationsbild auf ein Objekt aufweist, eine Erfassungseinrichtung zur Erfassung eines von dem Objekt reflektierten Lichts, einer elektronischen Datenverarbeitungseinrichtung zur Verarbeitung von mittels des Lichts erzeugten Bilddaten. Die Vorrichtung zeichnet sich dadurch aus, dass die Datenverarbeitungseinrichtung aufgrund einer Relativbewegung des Objekts zum Messgerät erzeugte Messfehler mittels einer der Relativbewegung entgegengesetzten nachträglichen Verschiebung und mittels der Bilddaten erzeugten Bilder kompensiert.

Gemäß einem zweiten Aspekt wird ein Verfahren zur Phasenschiebe-Profilometrie mit einem Messgerät bereitgestellt, das einen Projektor zur Aussendung einer Phasenschiebe-Mustersequenz mit einem integrierten Modulationsbild auf ein Objekt bereitstellt, eine Erfassungseinrichtung zur Erfassung eines von dem Objekt reflektierten Lichts, eine elektronische Datenverarbeitungseinrichtung zur Verarbeitung von mittels des Lichts erzeugten Bilddaten. Das Verfahren zeichnet sich dadurch aus, dass die Datenverarbeitungseinrichtung aufgrund einer Relativbewegung des Objekts zum Messgerät erzeugte Messfehler mittels einer der Relativbewegung entgegengesetzten nachträglichen Verschiebung von mittels der Bilddaten erzeugten Bildern kompensiert.

Eine Bewegungsschätzung durch Analyse eines Modulationsbildes und eine Rekonstruktion durch eine nachträgliche, synthetische Verschiebung der Kamerabilder entlang einer Hauptachse einer Kamera. Die vorliegende Erfindung weist folgende Vorteile auf: Es erfolgt eine Rekonstruktion eines bewegungsfreien, nahezu unverzerrten Phasenbildes, wodurch eine deutliche Verbesserung der Qualität der Messergebnisse geschaffen wird. Eine Kompensation bzw. Rekonstruktion erfolgt unabhängig von der geometrischen Beschaffenheit der Objektoberfläche, beispielsweise einer Welligkeit der Objektoberfläche. Es besteht keine Notwendigkeit für zusätzliche Messmuster durch Verwendung einer ein integriertes Modulationsbild aufweisenden Phasenschiebe-Mustersequenz.

Gemäß einer besonderen Ausgestaltung erfolgt eine Verwendung einer erfindungsgemäßen Vorrichtung und eines erfindungsgemäßen Verfahrens für eine mobile, freihandgeführte Profilometrie. Weitere vorteilhafte Ausgestaltungen werden in Verbindung mit den abhängigen Ansprüchen beansprucht.

Gemäß einer vorteilhaften Ausgestaltung kann die Verschiebung um eine Pixeldistanz Δx' erfolgen.

Gemäß einer weiteren vorteilhaften Ausgestaltung kann die Verschiebung mittels eines Interpolationsverfahrens ausgeführt werden.

Gemäß einer weiteren vorteilhaften Ausgestaltung kann die Verschiebung linear sein und für jedes einzelne Erfassungseinrichtungsbild folgender Gleichung entsprechen:

Gleichung (1):

$$\Delta x'(k, \partial x') = (k-1) \cdot \partial x'$$

wobei k[1...n]

$\partial x'$: Verschiebung je Erfassungseinrichtungsbild in Pixeln entlang einer Erfassungseinrichtungs-Hauptachse, proportional zur Geschwindigkeit der Relativbewegung sein kann.

Gemäß einer weiteren vorteilhaften Ausgestaltung kann die Verschiebung durch Analyse einer modulierten Wertesequenz M, die dem Modulationsbild entspricht, bewertet und optimiert werden, wobei die Wertesequenz M mittels einer folgenden Gleichung:

Gleichung 3:

$$M(x', y') = \frac{l_2(x', y') + l_4(x', y') - l_1(x', y') - l_3(x', y')}{l_1(x', y') + l_2(x', y') + l_3(x', y') + l_4(x', y')}$$

aus den erzeugten Bildern berechnet werden kann.

Gemäß einer weiteren vorteilhaften Ausgestaltung kann die Optimierung mittels folgender Gleichung ausgeführt

werden:

$$\text{Gleichung 2:}$$

$$\arg\min_{\partial x'} \sum_{x'} \left| \frac{d}{dx'} M(x', \partial x') \right|$$

Mit x': Koordinaten in einer Hauptrichtung eines Koordinatensystems der Erfassungseinrichtung;
$\partial x'$ Verschiebung, wobei mit kleiner werdender Summe der Ableitungsbeträge des Modulationsbilds die Kompensation verbessert werden kann;
M: modulierte Wertesequenz.

Gemäß einer weiteren vorteilhaften Ausgestaltung kann die Optimierung mittels folgender Gleichung ausgeführt werden:

$$\text{Gleichung (6):}$$

$$\arg\min_{\partial x'} \{\max[M(x', \partial x')]\}$$

mit x': Koordinate in einer Hauptrichtung eines Koordinatensystems der Erfassungseinrichtung;
$\partial x'$ : Verschiebung, wobei mit kleiner werdender maximaler Amplitude des Modulationsbilds die Kompensation verbessert werden kann.

Gemäß einer weiteren vorteilhaften Ausgestaltung kann die Optimierung mittels folgender Gleichung ausgeführt werden:

$$\text{Gleichung (7):}$$

$$\arg\min_{\partial x'} \{\text{var}[M(x', \partial x')]\}$$

mit x': Koordinate in einer Hauptrichtung eines Koordinatensystems der Erfassungseinrichtung,
$\partial x'$ : Verschiebung, wobei mit kleiner werdender Varianz der Amplitude des Modulationsbildes die Kompensation verbessert werden kann.

Die vorliegende Erfindung wird anhand von Ausführungsbeispielen in Verbindung mit den Figuren näher beschrieben. Es zeigen:

Figur 1      ein Ausführungsbeispiel einer Vorrichtung zur Phasenschiebe-Profilometrie;
Figur 2      Auswirkungen einer Relativverschiebung in einer x-, einer y- und/oder eine z-Richtung eines Objekts zu einem Phasenschiebe-Profilometer;
Figur 3      zwei Ausführungsbeispiele eines Modulationsbildes und eines Phasenbildes;
Figur 4      eine Integration eines Modulationsbildes in eine Phasenschiebe-Sequenz sowie eine Rekonstruktion eines Modulationsbildes aus den Kamerabildern dar;
Figur 5      ein Ausführungsbeispiel einer erfindungsgemäßen Vorrichtung;
Figur 6      eine erfindungsgemäße Kompensation bei einer Phasenschiebe-Sequenzlänge von vier Bildern;
Figur 7      ein durch eine Freihandbewegung verzerrtes Modulationsbild;
Figur 8      eine Optimierung einer synthetischen Verschiebung von Kamerabildern zueinander:
Figur 9      im gleichen Experiment eine schrittweise Optimierung von Gleichung 2 anhand eines Teils des Modulationsbildes in der linken Spalte und eines Teils des Phasenbildes in der rechten Spalte;
Figur 10     ein moduliertes Bild vor und nach einer Optimierung;
Figur 11     eine Verwendung von drei verschiedenen Kriterien zur Berechnung einer optimalen simulierten Bewegung;
Figur 12     ein Ausführungsbeispiel für ein erfindungsgemäßes Verfahren.

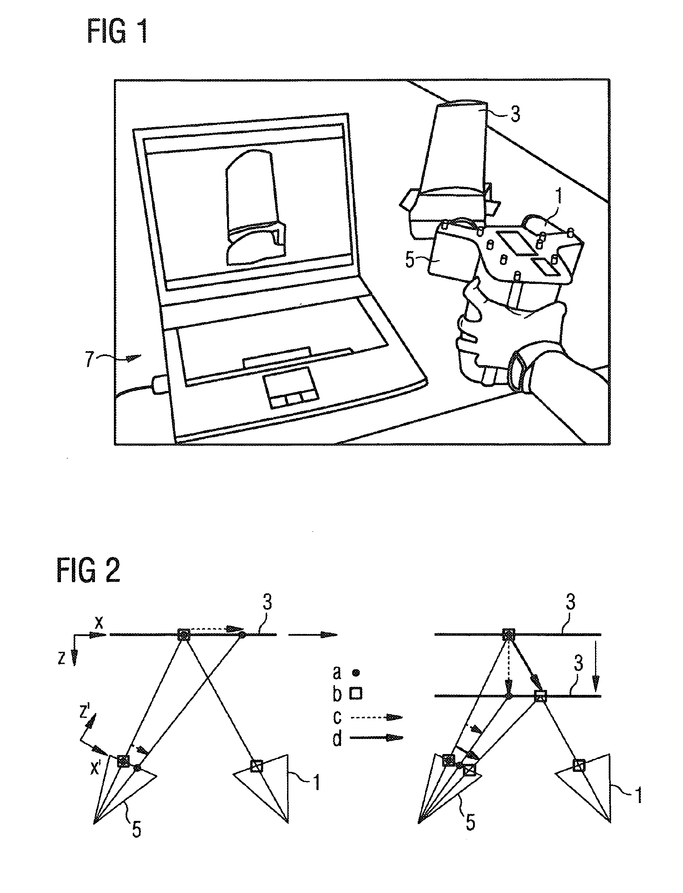

Figur 1 zeigt einen Projektor 1 zur Aussendung einer Phasenschiebe-Mustersequenz mit einem integrierten Modulationsbild auf ein Objekt 3.

Figur 2 zeigt Auswirkung einer Relativverschiebung in einer x-, einer y- und/oder eine z-Richtung eines Objekts zu einem Phasenschiebe-Profilometer. Bezugszeichen 1 kennzeichnet einen Projektor zur Aussendung einer ein integriertes Modulationsbild aufweisenden Phasenschiebe-Mustersequenz auf ein Objekt 3. Bezugszeichen 5 kennzeichnet eine Erfassungseinrichtung 5 zur Erfassung eines von dem Objekt 3 reflektierten Lichts. Die vorliegende Erfindung beansprucht eine Vorrichtung und ein Verfahren zur Schätzung und Kompensation von Messfehlern in Folge von relativer Bewegung zwischen Messobjekt 3 und Phasenschiebe-Profilometer während eines Messzyklus.

Einen wesentlichen Anteil an den Messfehlern trägt der z-Anteil der relativen Bewegung zwischen Messgerät und Objekt 3. Der z-Anteil führt zu einer Verschiebung der Messmuster auf einer Hauptachse im Koordinatensystem der Erfassungseinrichtung 5. Die Hauptachse kann beispielsweise die x'-Achse sein. Die Erfassungseinrichtung 5 kann besonders vorteilhaft eine Kamera sein. In Figur 2 bezeichnet das Symbol a einen Texturpunkt, das Symbol b ein Projektionsmuster, c eine Texturbewegung und d eine Strukturbewegung. Das in Figur 2 dargestellte Messsystem weist eine Erfassungseinrichtung 5 und einen Projektor 1 auf. Eine relative Bewegung in z-Richtung entspricht einer Bewegung in x'-Richtung aus der Sicht der Erfassungseinrichtung 5.

Eine erfindungsgemäße Kompensation von Bewegungsfehlern geschieht durch Bewegungssimulation einer entgegengesetzten Bewegung, die die Bewegungsfehler rückgängig macht. Die entgegengesetzte Bewegung wird durch eine künstliche, nachträgliche Verschiebung von Kamerabildern um die Pixeldistanz $\Delta x'$ simuliert. Eine Verschiebung kann mittels verschiedener Interpolationsverfahren, beispielsweise eine lineare Interpolation, ausgeführt werden. Die Verschiebung für jedes individuelle Kamerabild entspricht dabei beispielsweise folgender Gleichung:

Gleichung 1:

$$\Delta x'(k, \partial x') = (k - 1) \cdot \partial x'$$

mit k: Kamerabild [1...N]

$\partial x'$ : Verschiebung je Kamerabild in Pixeln entlang einer Kamera-Hauptachse, proportional zur relativen Geschwindigkeit

Gleichung 1 entspricht der Simulation einer linearen Bewegung. Das heißt, die Beträge, um die sich die Messmuster zueinander verschieben, sind konstant. Eine optimale simulierte Bewegung wird mit Hilfe eins Optimierungsverfahrens ermittelt. Ein mögliches Vorgehen bei der Optimierung ist beispielsweise mittels Gleichung 2 gegeben:

Gleichung 2:

$$\arg \min_{\partial x'} \sum_{x'} \left| \frac{d}{dx'} M(x', \partial x') \right|$$

mit x': Koordinate in einer Hauptrichtung des Kamera-Koordinatensystems

$\partial x'$: Simulierte Bewegung beziehungsweise Verschiebung M: Modulierte Wertesequenz
und

Gleichung 3:

$$M(x', y') = \frac{l_2(x', y') + l_4(x', y') - l_1(x', y') - l_3(x', y')}{l_1(x', y') + l_2(x', y') + l_3(x', y') + l_4(x', y')}$$

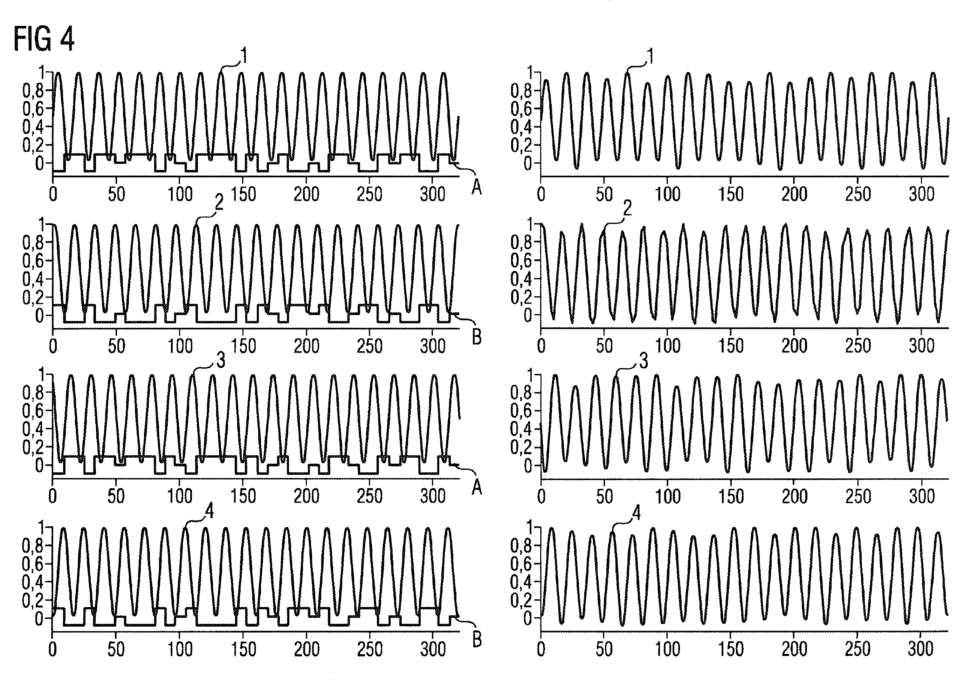

Der Term M entspricht dabei einem aus den Kamerabildern errechneten, sogenannten Modulationsbild. Das Modulationsbild ist in Verbindung mit Figur 4 und zusätzlich in der EP 09 006 980 beschrieben. Die Verwendung eines Modulationsbilds weist den Vorteil auf, die Phasenschiebe-Sequenz auf vier Bilder zu verkürzen. Die vorliegende Erfindung beansprucht daher einen weiteren Erfindungsgedanken zum Modulationsbild.

Das Modulationsbild ist eine Erweiterung der klassischen Phasenschiebe-Mustersequenz, und zwar mit dem Ziel, in den Mustern zusätzlich Informationen zu integrieren und nach der Aufnahme zu extrahieren. Die Integration und Extraktion des Modulationsbildes wird in Verbindung mit Figur 4 beschrieben.

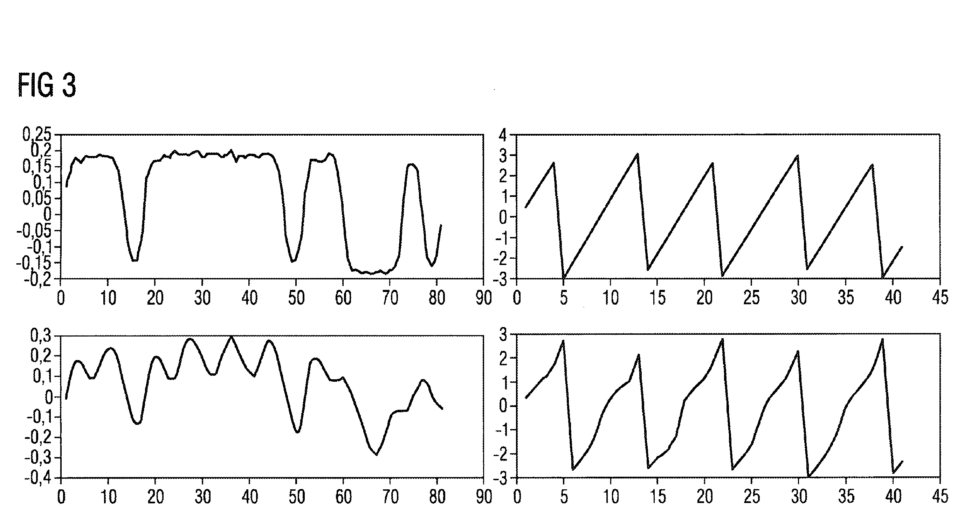

Figur 3 zeigt zwei Ausführungsbeispiele eines Modulationsbildes und eines Phasenbildes. Figur 3 zeigt in der ersten Zeile Querschnitte durch ein Modulationsbild und ein Phasenbild, wobei das Phasenbild die geometrischen Informationen bei der Phasenschiebe-Profilometrie trägt. Beide Bilder der ersten Zeile wurden ohne Bewegung während der Messung aufgenommen. Die modulierte Wertesequenz beziehungsweise das Modulationsbild auf der linken Seite entspricht in diesem Fall einer durch Unschärfe leicht abgerundeten Rechtecksequenz.

In der zweiten Zeile der Figur 3 sind beide Querschnitte unter Einfluss von Bewegung gezeigt. Die Welligkeit des Phasenbildes trotz einer ebenen gemessenen Oberfläche zeigt den Messfehler als Folge der Bewegung. Die Bewegung erzeugt ebenso Fehler im Modulationsbild, die beispielsweise für die Optimierung anhand Gleichung 2 genutzt werden können.

Figur 3 zeigt damit den Einfluss der Bewegung auf Modulationsbild und Phasenbild. Die Hochwertachse der Modulationsbilder stellt die Modulationsamplitude dar. Die Hochwertachse der Phasenbilder auf der rechten Seite stellt die Phase dar.

Gleichung 2 beschreibt die Minimierung der Summe der Ableitungsbeträge. Dies führt zu kleinen Bewertungsgrößen im Falle von bewegungsfreien Aufnahmen, da dort das Modulationsbild korrekt rekonstruiert wird und sich Plateaus mit kleiner Ableitung entsprechend der Rechtecksequenz herausbilden. Dabei ist zusätzlich eine geminderte Gewichtung von sehr steilen Flanken sinnvoll.

Die Kompensation nach diesem Kriterium macht das Verfahren unabhängig vom Phasenverlauf. Dadurch wird die Bewegungskompensation unabhängig von der Oberflächengeometrie des Messobjekts.

Figur 4 stellt eine Integration eines Modulationsbildes in eine Phasenschiebe-Sequenz sowie eine Rekonstruktion eines Modulationsbildes aus Kamerabildern dar. Figur 4 zeigt in der linken Spalte Querschnitte durch Messmuster einer herkömmlichen Phasenschiebe-Sequenz mit vier Bildaufnahmen. Eine sinusoidale Modulation, die der Helligkeit des projizierten Musters entspricht, wird dabei für jedes aufeinanderfolgende Bild um jeweils pi/2 in der Phase verschoben.

Figur 4 zeigt auf der linken Seite vier Messmuster 1, 2, 3 und 4. Zusätzlich zu dieser sinusoidalen Modulation wird durch Amplitudenmodulation eine zunächst beliebige Wertesequenz, das ist in der linken Spalte der eckige Verlauf, mit dem jeweiligen Phasenschiebemuster überlagert. Die Modulation der Codesequenz erfolgt dabei abwechselnd mit positiven und negativen Vorzeichen. Die Modulation ist durch Modulation A und B gekennzeichnet. Dadurch wird die Trennung von periodischer und nicht-periodischer Modulation ermöglicht. Des Weiteren ist die Modulation ortsfest, das heißt sie nimmt nicht an der Phasenverschiebung teil. Die resultierende Mustersequenz ist in Amplituden normalisierter Form in der rechten Spalte der Figur 4 dargestellt. Dabei sind in der rechten Spalte der Figur die modulierten Messmuster 1, 2, 3 und 4 dargestellt.

Das heißt, Figur 4 zeigt links eine Phaseverschiebesequenz sowie eine Vorzeichen-alternierende ortsfeste Modulation. Figur 4 zeigt rechts ein normalisiertes Resultat der Amplitudenmodulation.

Das Modulationsbild kann nach der Projektion der Mustersequenz auf das Messobjekt aus den entstandenen Kamerabildern rekonstruiert werden. Dabei ist besonders hervorzuheben, dass die modulierte Sequenz das für die Qualität der Messdaten entscheidende sogenannte Phasenbild beeinflusst. Die Berechnung des Phasenbildes erfolgt auf herkömmliche Weise, z.B. anhand von Gleichung 4. Die Rekonstruktion des Modulationsbildes erfolgt nach Gleichung 5:

Gleichung 4:

$$\phi_{Phase}(x, y) = \arctan 2\left[\frac{l_3(x, y) - l_1(x, y)}{l_4(x, y) - l_2(x, y)}\right]$$

Gleichung 5:

$$M(x, y) = \frac{l_2(x, y) + l_4(x, y) - l_1(x, y) - l_3(x, y)}{l_1(x, y) + l_2(x, y) + l_3(x, y) + l_4(x, y)}$$

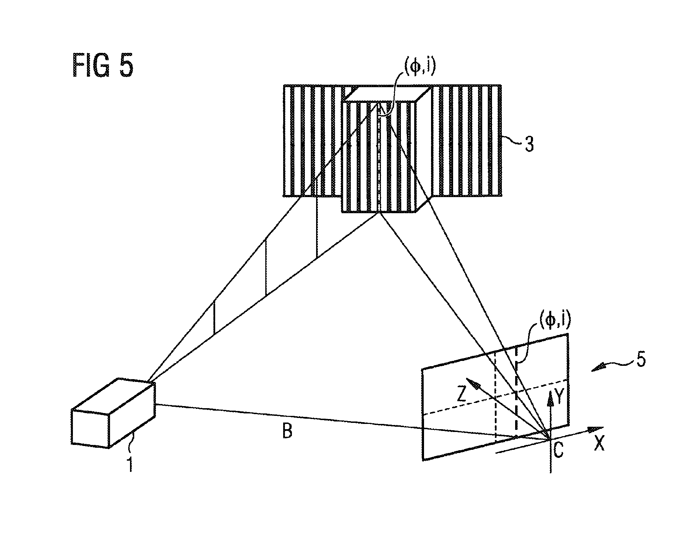

Figur 5 zeigt ein Ausführungsbeispiel einer erfindungsgemäßen Vorrichtung.

Die erfindungsgemäße Vorrichtung weist mindestens eine Einrichtung zur Beleuchtung eines Messobjekts 3 mit einer modifizierten Phasenschiebe-Mustersequenz, das ist eine ein integriertes Modulationsbild aufweisende Phasenschiebe-Mustersequenz. Des Weiteren zeigt Figur 5 einen Projektor 1 als Einrichtung zur Beleuchtung des Messobjekts 3. Des Weiteren zeigt Figur 5 einen Bildwandler zur Aufnahme der Messszene. Der Bildwandler ist eine Erfassungseinrichtung 5 zur Erfassung der Messszene. Diese Erfassungseinrichtung 5 kann beispielsweise durch eine Kamera oder auch mehrere Kameras realisiert sein. Zusätzlich wird eine Einrichtung 7 zur Verarbeitung der Bilddaten benötigt. Dies kann beispielsweise ein Personal Computer sein. In Figur 5 zeigt φ eine Streifenphase und i einen Streifenindex. Figur 5 zeigt ein codiertes Phasenschiebemuster von vier. B stellt eine Basis dar. Figur 5 zeigt ein Phasenschiebe-Profilometer mit modifizierter Phasenschiebe-Mustersequenz, das heißt mit einer ein integriertes Modulationsbild aufweisenden Phasenschiebe-Mustersequenz. Das Ausführungsbeispiel gemäß Figur 5 verwendet eine Kamera als Erfassungseinrichtung 5.

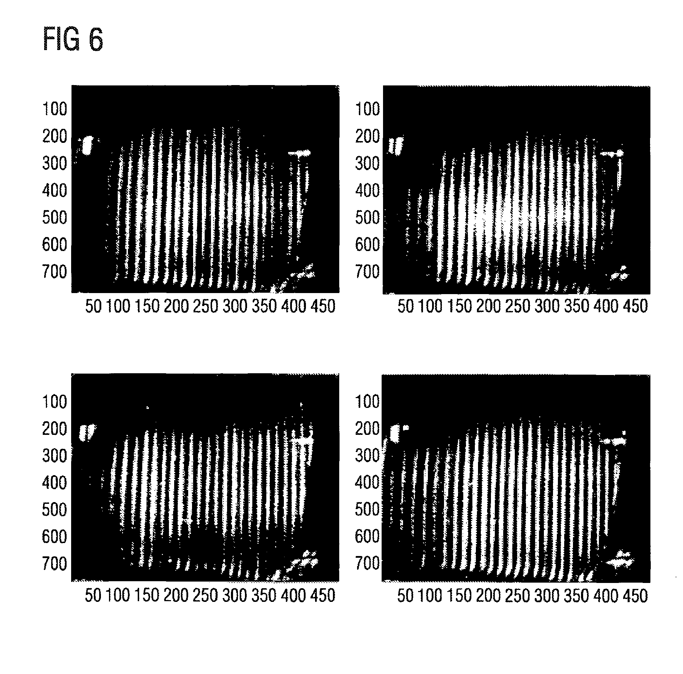

Eine erfindungsgemäße Bewegungskompensation kann grundsätzlich mit jeder beliebigen modulierten Wertesequenz erfolgen. Gemäß Figur 6 wird eine Anwendung bei einer Phasenschiebe-Sequenzlänge von vier Bildern gezeigt. Das Profilometer wird handgeführt relativ zu einem Messobjekt bewegt. Figur 6 zeigt die vier während der Messung entstehenden Kamerabilder. Figur 4 zeigt vier von einer modifizierten Phasenschiebesequenz beleuchtete Kamerabilder.

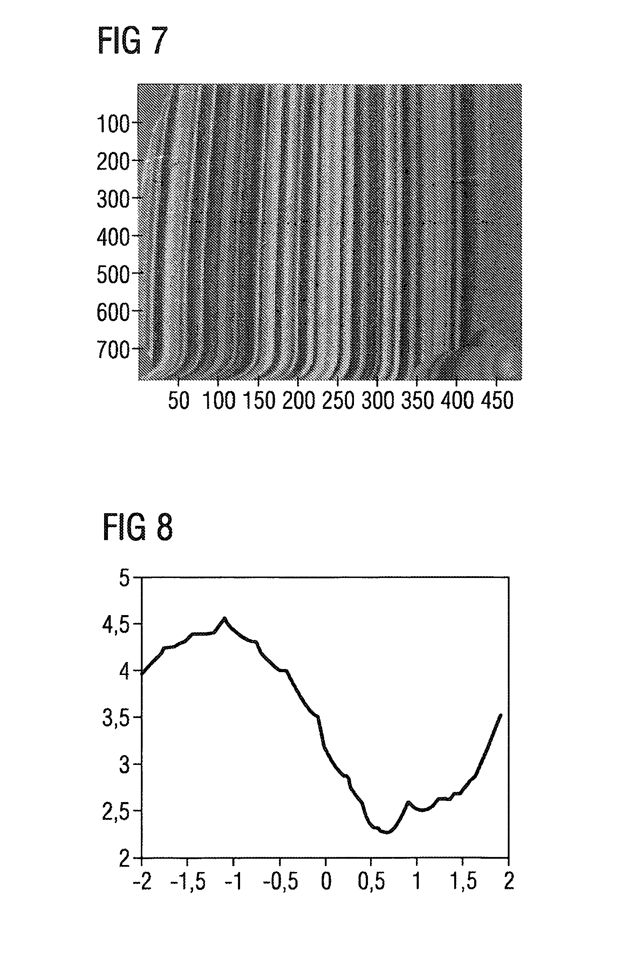

Durch eine räumliche Verschiebung der Messmuster in Richtung einer Kamera-Hauptachse wird das Modulationsbild verzerrt. Die Verzerrung zeigt sich in Figur 7 durch die unregelmäßige Werteverteilung (Histogramm) der Streifensequenz. Eine Kamera-Hauptachse kann beispielsweise eine x-Achse oder eine y-Achse eines Kamera-Koordinatensystems sein. Figur 7 zeigt ein durch eine Freihandbewegung verzerrtes Modulationsbild.

Figur 8 zeigt eine Optimierung einer synthetischen Verschiebung von Kamerabildern zueinander. Die Rechtswertachse stellt die Verschiebung in Pixeln dar. Die Hochwertachse stellt die Summe der Ableitung der Modulation dar. Ein Bewegungskompensations-Algorithmus optimiert den in Gleichung 2 beschriebenen Ausdruck, indem er die aufgenommenen Intensitätsbilder im Subpixel-Bereich entsprechend Gleichung 1 hier horizontal verschiebt. Figur 8 zeigt das Residuum der Optimierung über der synthetischen Verschiebung der Kamerabilder zueinander. Die optimale Verschiebung liegt in diesem Fall bei ca. 0,6 Pixeln. Das heißt eine horizontale Verschiebung der aufgenommenen Intensitätsbilder jeweils um 0,6 Pixel zueinander ergibt das minimale Residuum für Gleichung 2.

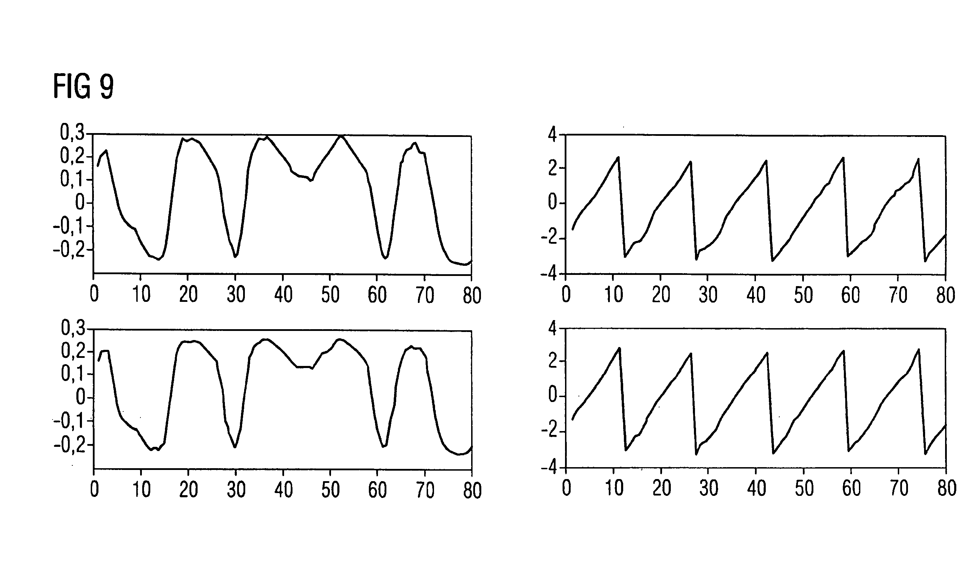

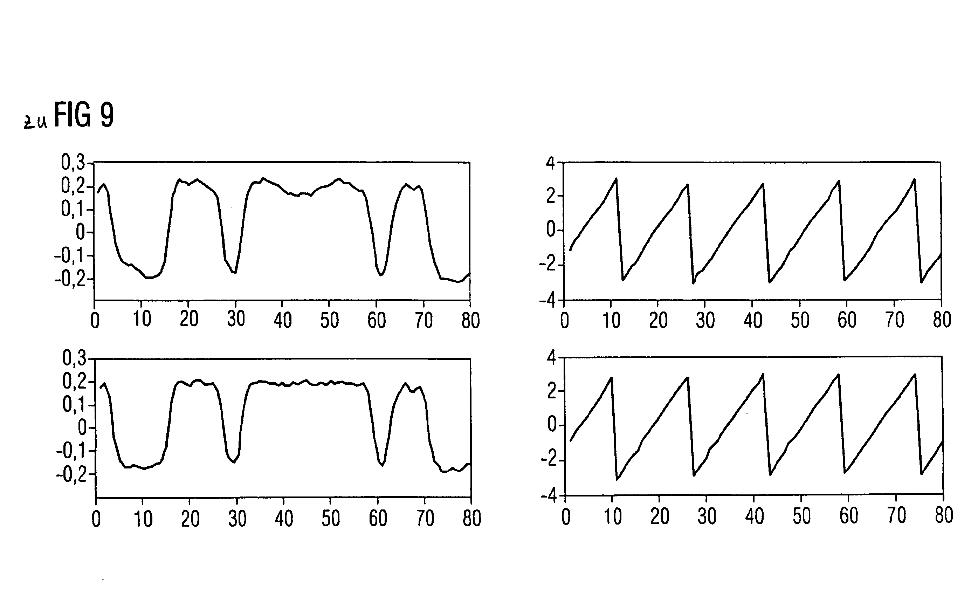

Im gleichen Experiment zeigt Figur 9 eine schrittweise Optimierung von Gleichung 2 anhand eines Teils des Modulationsbildes in der linken Spalte und eines Teils des Phasenbildes in der rechten Spalte. Zeile 1 zeigt beide Sequenzen, wie sie nach Aufnahme der Bildsequenzen mit Hilfe von Gleichung 4 und Gleichung 5 errechnet wurden. Aufgrund der Bewegung ist das Phasenbild, das die geometrische Information trägt, in unbekannter Weise verzerrt. Eine schrittweise, synthetische Verschiebung der Kamerabilder entlang einer Kamera-Hauptachse kompensiert diese Bewegungsartefakte. In Figur 9 zeigt in der ersten Zeile auf der linken Seite ein Modulationsbild bei 0 Pixelverschiebung und auf der rechten Seite ein Phasenbild bei 0 Pixelverschiebung. Figur 9 zeigt in der zweiten Zeile auf der linken Seite ein Modulationsbild bei 0,2 Pixelverschiebung und auf der rechten Seite ein Phasenbild bei 0,2 Pixelverschiebung. Figur 9 zeigt in der dritten Zeile links ein Modulationsbild bei 0,4 Pixelverschiebung und rechts ein Phasenbild bei 0,4 Pixelverschiebung. Figur 9 zeigt in der vierten Zeile auf der linken Seite ein Modulationsbild bei 0,6 Pixelverschiebung und auf der rechten Seite ein Phasenbild bei 0,6 Pixelverschiebung.

Die schrittweise synthetische Verschiebung der Kamerabilder entlang der Kamera-Hauptachse kompensiert diese Bewegungsartefakte. Der optimale Zyklus ist erreicht bei einer Verschiebung von 0,6 Pixeln, das minimale Residuum, so wie dies Figur 8 darstellt. Figur 9 zeigt eine schrittweise Optimierung anhand von Gleichung 2. Es stellt die Auswirkungen auf die modulierte Sequenz und die Phasensequenz dar.

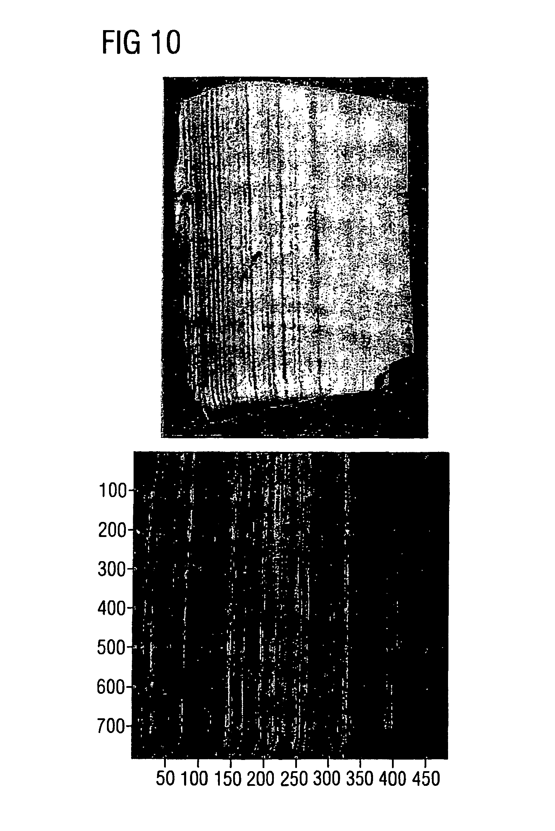

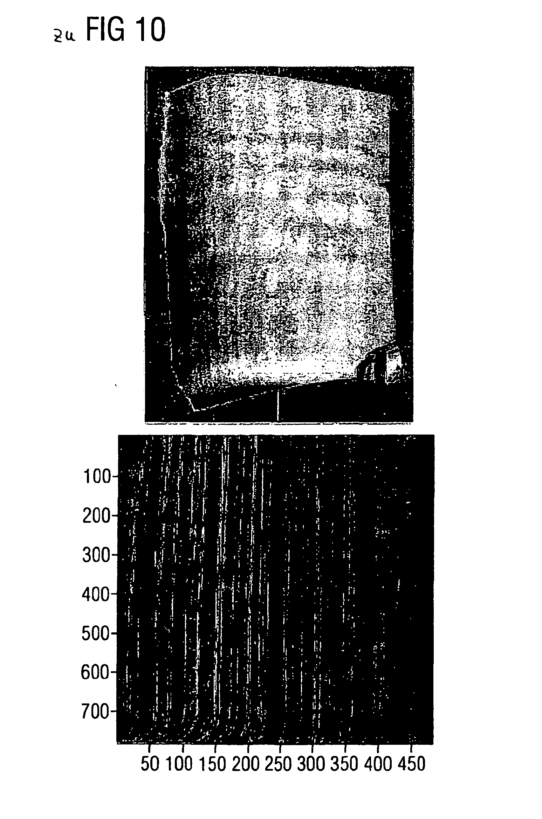

Figur 10 zeigt ein moduliertes Bild vor und nach einer Optimierung. Die Rechteckfunktion des Modulationsbildes ist im rechten Bild der Figur 10 nahezu vollständig korrigiert. Figur 10 zeigt eine 3D-Rekonstruktion und das dazugehörige modulierte Bild vor (links) und nach der Kompensation (rechts). Figur 10 zeigt das modulierte Bild vor (links) und nach (rechts) der Optimierung. Die Rechteckfunktion des Modulationsbildes ist im rechten Bild nahezu vollständig korrigiert. Figur 10 zeigt links ein Modulationsbild mit Bewegungsartefakt und rechts ein Modulationsbild nach der Kompensation. Die Modulationsbilder sind in der zweiten Zeile der Figur 10 dargestellt.

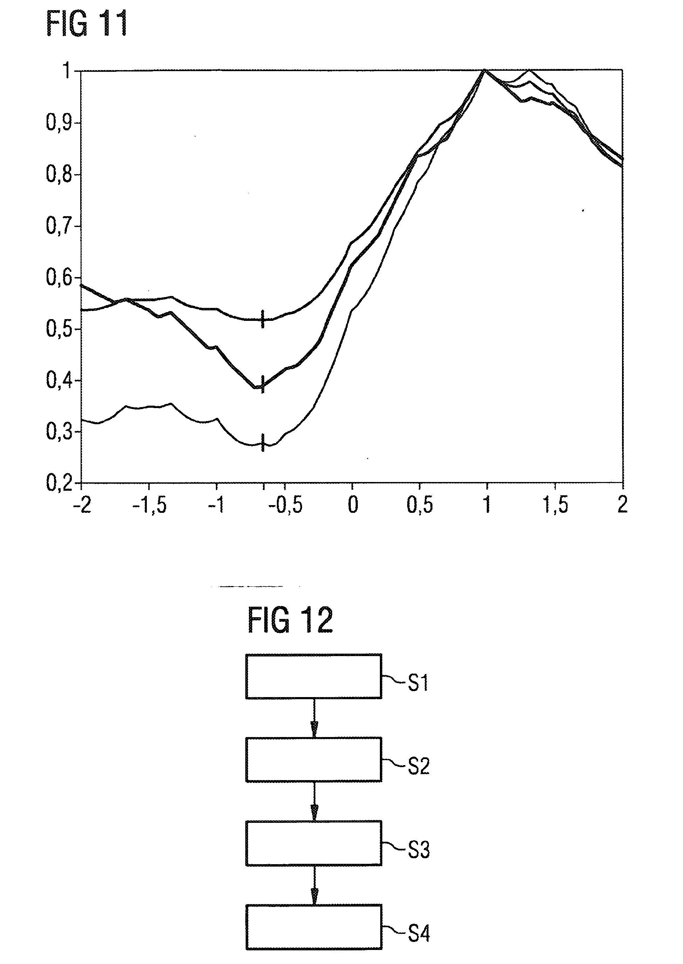

Figur 11 zeigt eine Verwendung von drei verschiedenen Kriterien zur Berechnung einer optimalen simulierten Bewegung.

Die optimale simulierte Bewegung wurde in diesem Experiment gemäß einem ersten Kriterium mit Gleichung 2 berechnet, in der die Summe der Ableitungsbeträge des verschobenen Modulationsbildes entlang einer Hauptachse gebildet wird. Eine Evaluierung der optimalen synthetischen Verschiebung kann ebenso nach weiteren Kriterien bestimmt werden:

In Figur 9 ist zu beobachten, dass die Amplitude des Modulationsbildes mit jedem Verschiebungsschritt kleiner wird. Daher führt die Amplitude des Modulationsbildes auch zu einer richtigen Bewertung der simulierten Bewegung. Ein mögliches Vorgehen nach diesem Kriterium ist durch Gleichung 6 gegeben:

Gleichung (6):

$$\arg\min_{\partial x'}\{\max[M(x', \partial x')]\}$$

Ein weiteres drittes mögliches Kriterium zur Berechnung der optimalen simulierten Bewegung ist die Varianz des Modulationsbildes. Die Varianz der Amplitude der modulierten Wertesequenz hat bei der optimalen synthetischen Bewegung einen minimalen Wert. Das Optimierungsverfahren nach diesem dritten Kriterium wird in Gleichung 7 beschrieben:

$$\text{Gleichung (7):}$$

$$\arg\min_{\partial x'}\{var[M(x', \partial x')]\}$$

Die oben beschriebenen drei Beispiele der Bewertungskriterien für das Optimierungsverfahren nach dem Modulationsbild sind in Figur 11 aufgetragen. Es ist zu beobachten, dass alle drei Kriterien zu der gleichen simulierten Bewegung führen. Figur 11 zeigt auf der Rechtswertachse eine Verschiebung in Pixeln und auf der Hochwertachse einen normierten Wert. Die minimalen Residuen zeigen sich bei der annähernd gleichen simulierten Bewegung bei einer Verschiebung von -0,6 Pixeln für alle drei Kriterien. Dabei ist an der Verschiebung von -0,6 Pixeln die untere Kurve nach Gleichung 2 erzeugt, die mittlere Kurve nach Gleichung 6 und die obere Kurve nach Gleichung 7 erzeugt. Dabei entspricht die Bewertung nach Gleichung 2 der Bewertung der Summe der Modulationsableitung, der Bewertung nach Gleichung 6 der Bewertung der Amplitude des Modulationsbildes und nach Gleichung 7 der Bewertung nach der Varianz des Amplitudenbildes.

Figur 12 zeigt ein Ausführungsbeispiel für ein erfindungsgemäßes Verfahren zur Phasenschiebe-Profilometrie. Mit einem Schritt S1 erfolgt ein Bereitstellen eines Projektors (1) zur Aussendung einer ein integriertes Modulationsbild aufweisenden Phasenschiebe-Mustersequenz auf ein Objekt (3). Mit einem Schritt S2 erfolgt ein Bereitstellen einer Erfassungseinrichtung (5) zur Erfassung eines von dem Objekt (3) reflektierten Lichts. Mit einem Schritt S3 erfolgt ein Bereitstellen einer elektronischen Datenverarbeitungseinrichtung (7) zur Verarbeitung von mittels des Lichts erzeugten Bilddaten. Mit einem Schritt S4 kompensiert die Datenverarbeitungseinrichtung (7) aufgrund einer Relativbewegung des Objekts zum Messgerät erzeugte Messfehler mittels einer der Relativbewegung entgegen gesetzten nachträglichen Verschiebung von mittels der Bilddaten erzeugten Bildern.

Literaturliste

[1] T. Weise, B.Leibe, L. Van Gool, Fast 3D Scanning with Automatic Motion Compensation, IEEE Conference on Computer Vision and Pattern Recognition (CVPR'07), 1-8 (2007)

[2] S. Gumhold, S. König, Image-Based Motion Compensation for Structured Light Scanning of Dynamic Surfaces, Int. J. Intell. Systems, Technol. App. 5, n. 3/4, 434-441 (2008)

[3] R. K. R. Cavaturu, Motion Correction Structured Light using Pattern Interleaving Technique, Masters's Thesis, Department of Electrical Engineering, University of Kentucky (2008)

[4] Patentanmeldung EP 09 006 980 (noch nicht veröffentlicht)

**Patentansprüche**

**1.** Vorrichtung zur Messung und Kompensation von Bewegungseinflüssen bei Phasenschiebe-Profilometrie mit einem Messgerät aufweisend
einen Projektor (1) zur Aussendung einer ein integriertes Modulationsbild aufweisenden Phasenschiebe-Mustersequenz aus vier Messmustern auf
ein Objekt (3), wobei das Modulationsbild ortsfest ist,
einer Erfassungseinrichtung (5) zur Erfassung eines von dem Objekt (3) reflektierten Lichts;
einer elektronischen Datenverarbeitungseinrichtung (7) zur Verarbeitung von mittels des Lichts erzeugten Bilddaten;
wobei die Datenverarbeitungseinrichtung (7) dazu eingerichtet ist, aufgrund einer
Relativbewegung des Objekts zum Messgerät erzeugte Messfehler mittels einer der Relativbewegung entgegen gesetzten nachträglichen Verschiebung der mittels der Bilddaten erzeugten vier Bilder (11, 12, 13, 14) der Phasenschiebe-Mustersequenz zu kompensieren , **dadurch gekennzeichnet, dass**

die Datenverarbeitungseinrichtung (7) weiterhin dazu eingerichtet ist, die Verschiebung durch Analyse einer modulierten Wertesequenz M, die dem Modulationsbild entspricht, zu bewerten und zu optimieren , wobei die Wertesequenz M mittels einer folgenden Gleichung:

$$\text{Gleichung (3)} \quad M(x', y') = \frac{l_2(x', y') + l_4(x', y') - l_1(x', y') - l_3(x', y')}{l_1(x', y') + l_2(x', y') + l_3(x', y') + l_4(x', y')}$$

aus den vier erzeugten Bildern (11, 12, 13, 14) errechnet wird, und wobei;
die Optimierung mittels einer der folgenden Gleichungen ausgeführt wird:

$$\text{Gleichung (2)} \quad \arg\min_{\partial x'} \sum_{x'} \left| \frac{d}{dx'} M(x', \partial x') \right|$$

wobei mit kleiner werdender Summe der Ableitungsbeträge des Modulationsbilds die Kompensation verbessert wird; oder

$$\text{Gleichung (6)} \quad \arg\min_{\partial x'}\{\max[M(x', \partial x')]\}$$

wobei mit kleiner werdender Amplitude des Modulationsbilds die Kompensation verbessert wird; oder

$$\text{Gleichung (7)} \quad \arg\min_{\partial x'}\{\text{var}[M(x', \partial x')]\}$$

wobei mit kleiner werdender Varianz der Amplitude des Modulationsbilds die Kompensation verbessert wird; mit

x': Koordinate in einer Hauptrichtung eines Koor dinatensystems der Erfassungseinrichtung; *y*': Koordinate in der anderen Richtung des Koordinatensystems der Erfassungseinrichtung;
$\partial x'$ : Verschiebung.

**2.** Vorrichtung nach Anspruch 1,
**dadurch gekennzeichnet, dass**
die Verschiebung um eine Pixeldistanz $\Delta x'$ erfolgt.

**3.** Vorrichtung nach Anspruch 1 oder 2,
**dadurch gekennzeichnet, dass**
die Verschiebung mittels eines Interpolationsverfahrens ausgeführt wird.

**4.** Vorrichtung nach einem der Ansprüche 2 oder 3,
**dadurch gekennzeichnet, dass**
die Verschiebung linear ist und für jedes einzelne Erfassungseinrichtungsbild folgender Gleichung entspricht:

$$\text{Gleichung (1):} \quad \Delta x'(k, \partial x') = (k - 1) \cdot \partial x'$$

mit

k: [1..N]

$\partial x'$: Verschiebung je Erfassungseinrichtungsbild in Pixeln entlang einer Erfassungseinrichtungs-Hauptachse, proportional zur Geschwindigkeit der Relativbewegung.

**5.** Verfahren zur Messung und Kompensation von Bewegungseinflüssen bei Phasenschiebe-Profilometrie mit einem Messgerät aufweisend

einen Projektor (1) zur Aussendung einer ein integriertes Modulationsbild aufweisenden Phasenschiebe-Mustersequenz aus vier Messmustern auf

ein Objekt (3);

einer Erfassungseinrichtung (5) zur Erfassung eines von dem Objekt (3) reflektierten Lichts;

einer elektronischen Datenverarbeitungseinrichtung (7) zur Verarbeitung von mittels des Lichts erzeugten Bilddaten;

wobei die Datenverarbeitungseinrichtung (7) aufgrund einer Relativbewegung des Objekts zum Messgerät erzeugte Messfehler mittels einer der Relativbewegung entgegen gesetzten nachträglichen Verschiebung der mittels der Bilddaten erzeugten vier Bilder (11, 12, 13, 14) der Phasenschiebe-Mustersequenz

kompensiert, **dadurch gekennzeichnet, dass**

die Verschiebung durch Analyse einer modulierten Wertesequenz M, die dem Modulationsbild entspricht, bewertet und optimiert wird, wobei die Wertesequenz M mittels einer folgenden Gleichung:

$$\text{Gleichung (3)} \quad M(x', y') = \frac{l_2(x', y') + l_4(x', y') - l_1(x', y') - l_3(x', y')}{l_1(x', y') + l_2(x', y') + l_3(x', y') + l_4(x', y')}$$

aus den erzeugten vier Bildern (11, 12, 13, 14) errechnet wird, und wobei
die Optimierung mittels einer der folgenden Gleichungen ausgeführt wird:

$$\text{Gleichung (2)} \quad \arg\min_{\partial x'} \sum_{x'} \left| \frac{d}{dx'} M(x', \partial x') \right|$$

wobei mit kleiner werdender Summe der Ableitungsbeträge des Modulationsbilds die Kompensation verbessert wird; oder

$$\text{Gleichung (6)} \quad \arg\min_{\partial x'} \{ \max[M(x', \partial x')] \}$$

wobei mit kleiner werdender Amplitude des Modulationsbilds die Kompensation verbessert wird; oder

$$\text{Gleichung (7)} \quad \arg\min_{\partial x'} \{ \mathrm{var}[M(x', \partial x')] \}$$

wobei mit kleiner werdender Varianz der Amplitude des Modulationsbilds die Kompensation verbessert wird;
mit

x': Koordinate in einer Hauptrichtung eines Koordinatensystems der Erfassungseinrichtung; $y'$: Koordinate in der anderen Richtung des Koordinatensystems der Erfassungseinrichtung;
$\partial x'$: Verschiebung.

**6.** Verfahren nach Anspruch 5,
**dadurch gekennzeichnet, dass**
die Verschiebung um eine Pixeldistanz $\Delta x'$ erfolgt.

**7.** Verfahren nach Anspruch 5 oder 6,
**dadurch gekennzeichnet, dass**

die Verschiebung mittels eines Interpolationsverfahrens ausgeführt wird.

8. Verfahren nach einem der Ansprüche 6 oder 7,
**dadurch gekennzeichnet, dass**
die Verschiebung linear ist und für jedes einzelne Erfassungseinrichtungsbild folgender Gleichung entspricht:

$$\text{Gleichung (1):} \quad \Delta x'(k, \partial x') = (k-1) \cdot \partial x'$$

mit

k: [1...N]
$\partial x'$: Verschiebung je Erfassungseinrichtungsbild in Pixeln entlang einer Erfassungseinrichtungs-Hauptachse, proportional zur Geschwindigkeit der Relativbewegung.

9. Verwendung einer Vorrichtung nach einem der Ansprüche 1 bis 4 oder eines Verfahrens nach einem der Ansprüche 5 bis 8 für eine mobile, freihandgeführte Profilometrie.

## Claims

1. Device for measuring and compensating movement influences in phase-shift profilometry with the aid of a measuring device having
a projector (1) for emitting onto an object (3) a phase-shift pattern sequence which has an integrated modulation image and comprises four measurement patterns, the modulation image being fixed,
a detecting device (5) for detecting a light reflected by the object (3), and
an electronic data processing device (7) for processing image data produced by means of the light,
the data processing device (7) being set up to compensate measuring errors, generated by a movement of the object relative to the measuring device, by means of a subsequent shift, counteracting the relative movement, of the four images (11, 12, 13, 14), generated using the image data, of the phase-shift pattern sequence, **characterized in that**
the data processing device (7) is, furthermore, set up to evaluate and optimize the shift by analysing a modulated value sequence M which corresponds to the modulation image,
the value sequence M being calculated from the four generated images (11, 12, 13, 14) by means of the following equation:

$$\text{Equation (3)} \quad M(x', y') = \frac{l_2(x', y') + l_4(x', y') - l_1(x', y') - l_3(x', y')}{l_1(x', y') + l_2(x', y') + l_3(x', y') + l_4(x', y')},$$

and
the optimization being executed by means of one of the following equations:

$$\text{Equation (2)} \quad \arg\min_{\partial x'} \sum_{x'} \left| \frac{d}{dx'} M(x', \partial x') \right|,$$

the compensation being improved with a decreasing sum of the absolute derivatives of the modulation image; or

$$\text{Equation (6)} \quad \arg\min_{\partial x'} \left\{ \max\left[ M(x', \partial x') \right] \right\},$$

the compensation being improved with a decreasing amplitude of the modulation image; or

$$\text{Equation (7)} \quad \arg\min_{\partial x'}\{var[M(x', \partial x')]\},$$

the compensation being improved with decreasing variance of the amplitude of the modulation image; where

x' is the coordinate in a principal direction of a coordinate system of the detecting device;
y' is the coordinate in the other direction of the coordinate system of the detecting device; and
$\partial x'$ is the shift.

2. Device according to Claim 1, **characterized in that** the shift is performed by one pixel distance $\Delta x'$.

3. Device according to Claim 1 or 2, **characterized in that** the shift is executed by means of an interpolation method.

4. Device according to either of Claims 2 and 3, **characterized in that** the shift is linear and corresponds to the following equation for each individual detecting device image:

$$\text{Equation (1)} \quad \Delta x'(k, \partial x') = (k - 1) \cdot \partial x'$$

where

k is [1...N]
$\partial x'$ is the shift per detecting image device in pixels along a detecting device principal axis, in a fashion proportional to the speed of the relative movement.

5. Method for measuring and compensating movement influences in phase-shift profilometry with the aid of a measuring device having
   a projector (1) for emitting onto an object (3) a phase-shift pattern sequence which has an integrated modulation image and comprises four measurement patterns
   a detecting device (5) for detecting a light reflected by the object (3), and
   an electronic data processing device (7) for processing image data produced by means of the light,
   the data processing device (7) compensating measuring errors, generated by a movement of the object relative to the measuring device, by means of a subsequent shift counteracting the relative movement, of the four images (11, 12, 13, 14), generated using the image data, of the phase shift pattern sequence,
   **characterized in that**
   the shift is evaluated and optimized by analysing a modulated value sequence M which corresponds to the modulation image, the value sequence M being calculated from the four generated images (11, 12, 13, 14) by means of the following equation:

$$\text{Equation (3)} \quad M(x', y') = \frac{l_2(x', y') + l_4(x', y') - l_1(x', y') - l_3(x', y')}{l_1(x', y') + l_2(x', y') + l_3(x', y') + l_4(x', y')},$$

and
the optimization being executed by means of one of the following equations:

Equation (2)   $\arg\min\limits_{\partial x'} \sum\limits_{x'} \left| \dfrac{d}{dx'} M(x', \partial x') \right|,$

the compensation being improved with a decreasing sum of the absolute derivatives of the modulation image; or

Equation (6)   $\arg\min\limits_{\partial x'} \{ \max[M(x', \partial x')] \},$

the compensation being improved with a decreasing amplitude of the modulation image; or

Equation (7)   $\arg\min\limits_{\partial x'} \{ \mathrm{var}[M(x', \partial x')] \},$

the compensation being improved with decreasing variance of the amplitude of the modulation image; where

x' is the coordinate in a principal direction of a coordinate system of the detecting device;
y' is the coordinate in the other direction of the coordinate system of the detecting device; and
$\partial x'$ is the shift.

6.  Method according to Claim 5, **characterized in that** the shift is performed by one pixel distance Δx'.

7.  Method according to Claim 5 or 6, **characterized in that** the shift is executed by means of an interpolation method.

8.  Method according to either of Claims 6 and 7, **characterized in that** the shift is linear and corresponds to the following equation for each individual detecting device image:

Equation (1)   $\Delta x'(k, \partial x') = (k - 1) \cdot \partial x'$

where

k is [1...N]
$\partial x'$ is the shift per detecting image device in pixels along a detecting device principal axis, in a fashion proportional to the speed of the relative movement.

9.  Use of a device according to one of Claims 1 to 4, or a method according to one of Claims 5 to 8 for a mobile profilometry under freehand control.

**Revendications**

1.  Dispositif de mesure et de compensation des influences du mouvement lors d'une profilométrie par décalage de phase avec un appareil de mesure présentant un projecteur (1) permettant d'émettre une séquence échantillon de décalage de phase, constituée de quatre échantillons de mesure, présentant une image de modulation intégrée sur un objet (3), dans lequel l'image de modulation est fixe,
un appareil d'enregistrement (5) permettant l'enregistrement d'une lumière réfléchie par l'objet (3) ;

un appareil électronique de traitement de données (7) permettant un traitement de données d'image produites au moyen de ladite lumière ;

dans lequel l'appareil de traitement de données (7) est conçu pour compenser des erreurs de mesure produites par un mouvement relatif de l'objet par rapport à l'appareil de mesure au moyen d'un décalage ultérieur, inverse du mouvement relatif, des quatre images (11, 12, 13, 14), produites grâce aux données d'image, de la séquence échantillon de décalage de phase, **caractérisé en ce que**

l'appareil de traitement de données (7) est en outre conçu pour évaluer et optimiser le décalage grâce à une analyse d'une séquence de valeurs M modulée qui correspond à l'image de modulation, dans lequel la séquence de valeurs M est calculée au moyen d'une équation ci-dessous à partir des quatre images (11, 12, 13, 14) produites :

$$\text{équation (3)} \quad \mathbf{M(x', y')} = \frac{\mathbf{I_2(x'\,y') + I_4(x',y') - I_1(x',y') - I_3(x',y')}}{\mathbf{I_1(x',y') + I_2(x',y') + I_3(x',y') + I_4(x',y')}}$$

et dans lequel

l'optimisation est réalisée au moyen d'une des équations ci-dessous :

$$\text{équation (2)} \quad \mathbf{arg}\min_{\mathbf{\partial x'}} \sum_{\mathbf{x'}} \left| \mathbf{\frac{d}{dx'} M(x', \partial x')} \right|$$

dans lequel la compensation est améliorée lorsque la somme des modules des dérivés de l'image de modulation diminue ; ou

$$\text{équation (6)} \quad \mathbf{arg}\min_{\mathbf{\partial x'}} \{\mathbf{max[M(x', \partial x')]}\}$$

dans lequel la compensation est améliorée lorsque l'amplitude de l'image de modulation diminue ; ou

$$\text{équation (7)} \quad \mathbf{arg}\min_{\mathbf{\partial x'}} \{\mathbf{var[M(x', \partial x')]}\}$$

dans lequel la compensation est améliorée lorsque la variance de l'amplitude de l'image de modulation diminue ;

avec x' : coordonnées dans une direction principale d'un système de coordonnées de l'appareil d'enregistrement ;

y' : coordonnées dans l'autre direction du système de coordonnées de l'appareil d'enregistrement ;

$\partial$x' : décalage.

2. Appareil selon la revendication 1,
   **caractérisé en ce que**
   le décalage a lieu pour une distance de pixel $\Delta$x'.

3. Appareil selon la revendication 1 ou 2,
   **caractérisé en ce que**
   le décalage est réalisé au moyen d'un procédé d'interpolation.

4. Dispositif selon la revendication 2 ou 3,
   **caractérisé en ce que**
   le décalage est linéaire et correspond à l'équation ci-dessous pour chaque image individuelle d'appareil d'enregistrement :

$$\text{équation (1) : } \Delta x'(k, \partial x') = (k-1) \cdot \partial x'$$

avec k : [1...N]

$\partial x'$ : décalage pour chaque image d'appareil d'enregistrement en pixels le long d'un axe principal d'appareil d'enregistrement,

proportionnellement à une vitesse du mouvement relatif.

**5.** Procédé de mesure et de compensation des influences du mouvement lors d'une profilométrie par décalage de phase avec un appareil de mesure présentant un projecteur (1) permettant d'émettre sur un objet (3) une séquence échantillon de décalage de phase, constituée de quatre échantillons de mesure, présentant une image de modulation intégrée ;

un appareil d'enregistrement (5) permettant l'enregistrement d'une lumière réfléchie par l'objet (3) ;

un appareil électronique de traitement de données (7) permettant un traitement de données d'image produites au moyen de ladite lumière ;

dans lequel l'appareil de traitement de données (7) compense des erreurs de mesure produites par un mouvement relatif de l'objet par rapport à l'appareil de mesure au moyen d'un décalage ultérieur, inverse du mouvement relatif, des quatre images (11, 12, 13, 14), produites grâce aux données d'image, de la séquence échantillon de décalage de phase, **caractérisé en ce que**

le décalage est évalué et optimisé grâce à l'analyse d'une séquence de valeurs M modulée qui correspond à l'image de modulation, dans lequel la séquence de valeurs M est calculée au moyen d'une équation ci-dessous à partir des quatre images (11, 12, 13, 14) produites :

$$\text{équation (3) } \mathbf{M(x',y')} = \frac{l_2(x',y') + l_4(x',y') - l_1(x',y') - l_3(x',y')}{l_1(x',y') + l_2(x',y') + l_3(x',y') + l_4(x',y')}$$

et dans lequel

l'optimisation est réalisée au moyen d'une des équations ci-dessous :

$$\text{équation (2) } \underset{\partial x'}{\arg \min} \sum_{x'} \left| \frac{d}{dx'} \mathbf{M(x', \partial x')} \right|$$

dans lequel la compensation est améliorée lorsque la somme des modules des dérivées de l'image de modulation diminue ; ou

$$\text{équation (6) } \underset{\partial x'}{\arg \min} \{ \max[\mathbf{M(x', \partial x')}] \}$$

dans lequel la compensation est améliorée lorsque l'amplitude de l'image de modulation diminue ; ou

$$\text{équation (7) } \underset{\partial x'}{\arg \min} \{ \text{var}[\mathbf{M(x', \partial x')}] \}$$

dans lequel la compensation est améliorée lorsque la variance de l'amplitude de l'image de modulation diminue ;

avec x' : coordonnées dans une direction principale d'un système de coordonnées de l'appareil d'enregistrement ;

y' : coordonnées dans l'autre direction du système de coordonnées de l'appareil d'enregistrement ;

$\partial x'$ : décalage.

**6.** Procédé selon la revendication 5,

**caractérisé en ce que**

le décalage a lieu pour une distance de pixel Δx'.

7. Procédé selon la revendication 5 ou 6,
   **caractérisé en ce que**
   le décalage est réalisé au moyen d'un procédé d'interpolation.

8. Procédé selon la revendication 6 ou 7,
   **caractérisé en ce que**
   le décalage est linéaire et correspond à l'équation ci-dessous pour chaque image individuelle d'appareil d'enregistrement :

$$\text{équation (1) : } \Delta x'(k, \partial x') = (k-1) \cdot \partial x'$$

avec k : [1...N]
$\partial x'$ : décalage pour chaque image d'appareil d'enregistrement en pixels le long d'un axe principal d'appareil d'enregistrement,
proportionnellement à une vitesse du mouvement relatif.

9. Utilisation d'un dispositif selon l'une quelconque des revendications 1 à 4 ou d'un procédé selon l'une quelconque des revendications 5 à 8 pour une profilométrie mobile, réalisée à main levée.

## FIG 1

## FIG 2

FIG 3

FIG 4

FIG 5

## FIG 6

## FIG 7

## FIG 8

FIG 9

EP 2 504 659 B1

EP 2 504 659 B1

## FIG 10

zu FIG 10

## FIG 11

## FIG 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 09006980 A

**In der Beschreibung aufgeführte Nicht-Patentliteratur**

- Schnelle 3D-Abtastung mit automatischer Bewegungskompensation. **THIBAUT WEISE.** Computer Vision Lab. ETH Zürich
- **T. WEISE ; B.LEIBE ; L. VAN GOOL.** Fast 3D Scanning with Automatic Motion Compensation. *IEEE Conference on Computer Vision and Pattern Recognition (CVPR'07),* 2007, 1-8
- **S. GUMHOLD ; S. KÖNIG.** Image-Based Motion Compensation for Structured Light Scanning of Dynamic Surfaces. *Int. J. Intell. Systems, Technol. App.,* 2008, vol. 5 (3/4), 434-441
- Motion Correction Structured Light using Pattern Interleaving Technique. **R. K. R. CAVATURU.** Masters's Thesis. Department of Electrical Engineering, University of Kentucky, 2008